(19) Europäisches Patentamt
European Patent Office
Office européen des brevets

(11) EP 2 794 742 B1

(12) **EUROPEAN PATENT SPECIFICATION**

(45) Date of publication and mention of the grant of the patent:
**20.03.2019 Bulletin 2019/12**

(21) Application number: **12809068.5**

(22) Date of filing: **17.12.2012**

(51) Int Cl.:
***C08K 3/00*** *(2018.01)* ***C08K 3/04*** *(2006.01)*
***C08K 3/38*** *(2006.01)* ***C08L 79/08*** *(2006.01)*

(86) International application number:
**PCT/US2012/070206**

(87) International publication number:
**WO 2013/096231 (27.06.2013 Gazette 2013/26)**

(54) **POLYIMIDE RESIN COMPOSITION**

POLYIMIDHARZZUSAMMENSETZUNG

COMPOSITION DE RÉSINE DE POLYIMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2011 US 201161577212 P**

(43) Date of publication of application:
**29.10.2014 Bulletin 2014/44**

(73) Proprietor: **E. I. du Pont de Nemours and Company**
**Wilmington, DE 19898 (US)**

(72) Inventors:
- **KRIZAN, Timothy D.**
  **Wilmington, Delaware 19810 (US)**
- **TILFORD, Susan H.**
  **Ewing, New Jersey 08638 (US)**

(74) Representative: **Heinemann, Monica**
**Abitz & Partner**
**Patentanwälte mbB**
**Arabellastraße 17**
**81925 München (DE)**

(56) References cited:
**EP-A1- 2 072 581**
**WO-A2-2008/054413**
**US-A- 4 898 905**
**US-A- 5 886 129**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The disclosure relates generally to polyimide resin compositions, and more particularly, polyimide resin compositions having encapsulated boron nitride and encapsulated graphite.

BACKGROUND OF THE INVENTION

The use of polyimide resins in the aerospace industry has increased in recent years due to the trend of replacing metals in aircraft with lighter materials having improved or equivalent performance of the replaced metal.

WO 2008/054413 A2 describes polyimide compositions containing lubricious filler and little or no electrically conducting materials which are useful for aircraft engine parts, such as bearing, bushings and washers, as well as for other uses. The polyimides can contain graphite.

US 4,898,905 A describes a sliding material consisting of (a) 10 to less than 69% of polyimide and/or polyamide-imide, from more than 30 to 68% of graphite, and, 1 to less than 30% of polytetrafluroethylene, $MoS_2$, Pb, and/or BN, or (b) 20 to 90% of polyimide and/or polyamide-imide, and from 0.5 to 20% clay, mullite, silica, and/or alumina, and at least 5% and balance of graphite.

US 5,886,129 discloses a rigid, aromatic polyimide composition prepared using a solution imidization process from an aromatic tetracarboxylic dianhydride and a diamine which is greater than 60 mole % to about 85 mole % p-phenylene diamine and 15 mole % to less than 40 mole % m-phenylene diamine, exhibiting exceptional tensile properties and thermal oxidative stability. The composition can contain fillers such as graphite.

SUMMARY OF THE INVENTION

An aspect of the present invention relates to a polyimide resin composition comprising: 0.5 weight percent (wt %) to 10 wt % hexagonal boron nitride having an average particle size from 0.1 μm to 7 μm; 10 wt % to 60 wt % graphite; and 30 wt % to 85 wt % polyimide resin based on the weight of the polyimide resin composition, wherein the polyimide resin encapsulates the boron nitride and encapsulates the graphite.

A second aspect of the present invention relates to an article selected from the group consisting of a bushing, a spacer, a valve, a seal ring, and a washer, wherein the article comprises: 0.5 weight percent (wt %) to 10 wt % hexagonal boron nitride having an average particle size from 0.1 μm to 7 μm; 10 wt % to 60 wt % graphite; and 30 wt % to 85 wt % polyimide resin based on the weight of the polyimide resin composition, wherein the polyimide resin encapsulates the boron nitride and encapsulates the graphite.

The illustrative aspects of the present invention are designed to solve the problems herein described and/or other problems not discussed.

DETAILED DESCRIPTION OF THE INVENTION

Polyimide resin compositions may be used in applications subject to stress, wear and eventual replacement. Deterioration of such compositions or articles comprising them can proceed through chemical or physical changes. Failure can be gradual and necessitate costly preventative maintenance or replacement (e.g. failure or risk of failure by erosion of the composition or degraded composition of the article), or catastrophic (e.g. by loss of strength of the degraded or eroded article causing sudden, possibly irrepairable, loss of function).

It has been discovered that an advantage that may be realized in the practice of some embodiments of polyimide resin compositions described herein is that polyimide resin compositions comprising both boron nitride and graphite encapsulated by the polyimide resin may maintain combinations of strength and long life under high wear at both ambient and high temperatures up to 475° C, or in an oxidizing atmosphere such as air, or both.

An embodiment of a polyimide resin composition according to the present invention is described herein. The polyimide resin composition comprises a polyimide resin, boron nitride, and graphite.

In an embodiment, the polyimide resin may comprise a polyimide in which 80%, of the linking groups between repeat units are imide groups. In another embodiment, the polyimide resin may comprise a polyimide in which 90% of the linking groups between repeat units are imide groups. In another embodiment, the polyimide resin may comprise a polyimide in which 98% of the linking groups between repeat units are imide groups. In an embodiment, the polyimide may be an aromatic polyimide.

The polyimide described herein may be an organic polymer in which 60 mol % to 100 mol % of the repeating units of the polymer chain thereof have a structure as represented by the following formula (I):

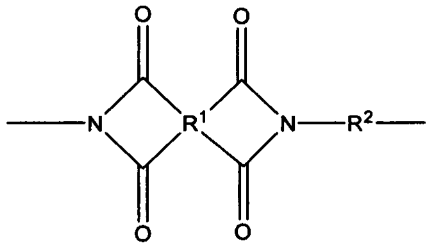

(I)

wherein $R^1$ is a tetravalent aromatic radical and $R^2$ is a divalent aromatic radical, as described below. In another embodiment, the mol % of the repeating units of formula (I) of the polymer chain may be 70 mol %. In another embodiment, the mol % of the repeating units of formula (I) of the polymer chain may be 80 mol %.

An embodiment of the polyimide resin as described herein may be synthesized, for example, by reacting a monomeric aromatic diamine compound, or derivatives thereof, with a monomeric aromatic tetracarboxylic acid compound, or derivatives thereof, and the tetracarboxylic acid compound may thus be the tetracarboxylic acid itself, a corresponding dianhydride, or a derivative of the tetracarboxylic acid such as a diester diacid or a diester diacidchloride. The reaction of the aromatic diamine compound with an aromatic tetracarboxylic acid compound may produce the corresponding polyamic acid ("PAA"), amic ester, amic acid ester, or other reaction product according to the selection of starting materials. An aromatic diamine may be typically polymerized with a dianhydride in preference to a tetracarboxylic acid, and in such a reaction a catalyst may be used in addition to a solvent. A nitrogen-containing base, phenol or an amphoteric material may be used as such a catalyst.

A PAA, as a precursor to a polyimide, may be obtained by polymerizing an aromatic diamine compound and an aromatic tetracarboxylic acid compound in an organic polar solvent that is generally a high-boiling solvent such as pyridine, N-methylpyrrolidone, dimethylacetamide, dimethylformamide or mixtures thereof. In an embodiment, the aromatic diamine compound and the aromatic tetracarboxylic acid compound may be substantially equimolar. The amount of all monomers in the solvent may be in a range from 5 wt % to 40 wt %, based on the combined weight of monomers and solvent. In an embodiment, the monomers may be in a range from 6 wt % to 35 wt %. In another embodiment, the monomers may be in a range from 8 wt % to 30 wt %. The temperature for the reaction may generally not be higher than 100° C, and may be in the range from 10° C to 80° C. The time for the polymerization reaction may be in a range from 0.2 hr to 60 hr.

Imidization to produce the polyimide, *i.e.,* ring closure in the polyamic acid, may then be effected through thermal treatment, chemical dehydration or both, followed by the elimination of a condensate (typically, water or alcohol). For example, ring closure may be effected by a cyclization agent such as pyridine and acetic anhydride; picoline and acetic anhydride; 2,6-lutidine and acetic anhydride, or the like.

In various embodiments of the thus-obtained polyimide, 60 mol % to 100 mol %, of the repeating units of the polymer chain thereof have a polyimide structure as represented by the following Formula (I):

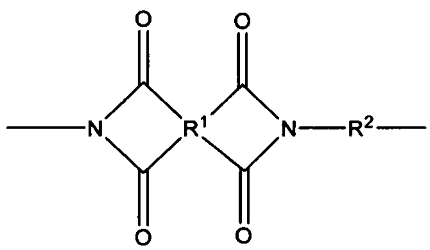

I

wherein $R^1$ is a tetravalent aromatic radical derived from the tetracarboxylic acid compound; and $R^2$ is a divalent aromatic radical derived from the diamine compound, which may typically be represented as $H_2N-R^2-NH_2$. In another embodiment, the mol % of the repeating units of formula (I) of the polymer chain may be 70 mol %. In another embodiment, the mol % of the repeating units of formula (I) of the polymer chain may be 80 mol %.

A diamine compound as used to prepare a polyimide for the polyimide resin described herein may be one or

more of the aromatic diamines that may be represented by the structure $H_2N-R^2-NH_2$, wherein $R^2$ is a divalent aromatic radical containing up to 16 carbon atoms and, optionally, containing one or more (but typically only one) heteroatoms in the aromatic ring, a heteroatom being, for example, selected from -N-, -O-, or -S-. In an embodiment, $R^2$ may be a biphenylene group. Examples of aromatic diamines suitable for use to make a polyimide resin described herein include but are not limited to 2,6-diaminopyridine, 3,5-diaminopyridine, 1,2-diaminobenzene, 1,3-diaminobenzene (also known as m-phenylenediamine or "MPD"), 1,4-diaminobenzene (also known as p-phenylenediamine or "PPD"), 2,6-diaminotoluene, 2,4-diaminotoluene, and benzidines such as benzidine and 3,3'-dimethylbenzidine. The aromatic diamines disclosed herein may be employed singly or in combination. In an embodiment, the aromatic diamine compound may be 1,4-diaminobenzene (also known as p-phenylenediamine or "PPD"), 1,3-diaminobenzene (also known as m-phenylenediamine or "MPD"), or mixtures thereof.

Aromatic tetracarboxylic acid compounds suitable for use to prepare the polyimide resin described herein may include but are not limited to aromatic tetracarboxylic acids, acid anhydrides thereof, salts thereof and esters thereof. An aromatic tetracarboxylic acid compound may be represented by Formula (II):

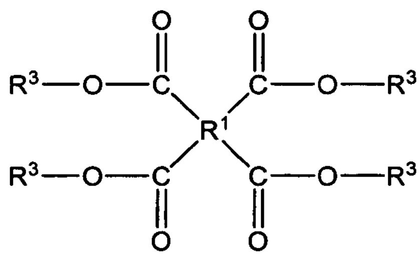

(II)

wherein $R^1$ may be a tetravalent aromatic group and each $R^3$ may independently be a hydrogen or a lower alkyl (*e.g.* a normal or branched $C_1$~$C_{10}$, $C_1$~$C_8$, $C_1$~$C_6$ or $C_1$~$C_4$) group. In an embodiment, the alkyl group may be a $C_1$ to $C_3$ alkyl group. In another embodiment, the tetravalent organic group $R^1$ may have a structure as represented by one of the following formulae:

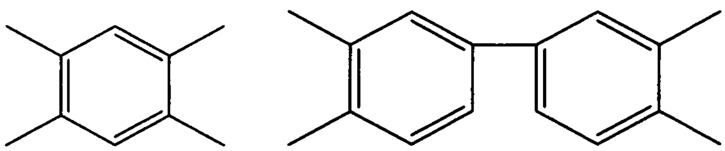

Examples of suitable aromatic tetracarboxylic acids include but are not limited to 3,3',4,4'-biphenyltetracarboxylic acid; 2,3,3',4'-biphenyltetracarboxylic acid; pyromellitic acid; and 3,3',4,4'-benzophenonetetracarboxylic acid. The aromatic tetracarboxylic acids may be employed singly or in combination. In one embodiment, the aromatic tetracarboxylic acid compound may be an aromatic tetracarboxylic dianhydride, such as 3,3',4,4'-biphenyltetracarboxylic dianhydride ("BPDA"); pyromellitic dianhydride ("PMDA"), 3,3',4,4'-benzophenonetetracarboxylic dianhydride; or mixtures thereof.

In one embodiment of a polyimide resin described herein, a polyimide polymer may be prepared from 3,3',4,4'-biphenyltetracarboxylic dianhydride ("BPDA") as the aromatic tetracarboxylic acid compound, and from 60 mol % to 85 mol % p-phenylenediamine ("PPD"); and from 15 mol % to 40 mol% m-phenylenediamine ("MPD") as the aromatic diamine compound. Such a polyimide is described in U.S. Patent 5,886,129, , and the repeat unit of such a polyimide may also be represented by the structure shown generally in the following Formula (III):

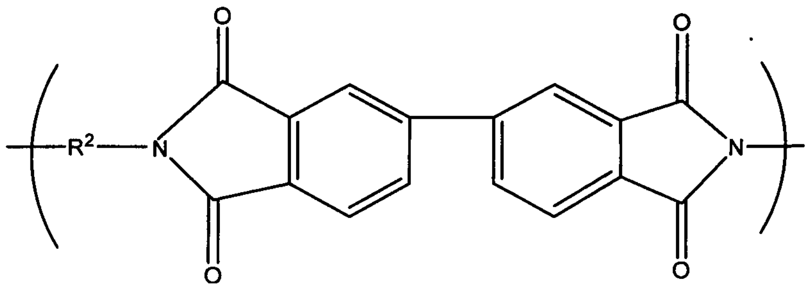

(III)

wherein 60 mol % to 85 mol % of the $R^2$ groups are p-phenylene radicals:

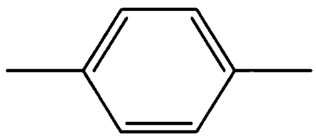

and 15 mol % to 40 mol % are m-phenylene radicals:

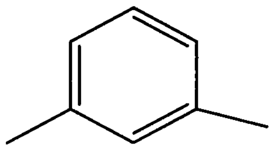

In another embodiment, a suitable polyimide polymer may be prepared from 3,3',4,4'-biphenyltetracarboxylic dianhydride ("BPDA") as a dianhydride derivative of the tetracarboxylic acid compound, and 70 mol % p-phenylenediamine and 30 mol % m-phenylenediamine as the diamine compound.

A polyimide as described herein may be a rigid polymer. A polyimide polymer may be considered rigid when there are no, or an insignificant amount (*e.g.* less than 10 mol %, less than 5 mol %, less than 1 mol %, or less than 0.5 mol%) of flexible linkages in the polyimide repeating unit. Flexible linkages are moieties that may be predominantly composed of a small number of atoms, and that have an uncomplicated structure (such as straight-chain rather than branched or cyclic), and thus may permit the polymer chain to bend or twist with relative ease at the location of the linkage. Examples of flexible linkages include but are not limited to: -O-, - N(H)-C(O)-, -S-, $-SO_2-$, -C(O)-, -C(O)-O-, $-C(CH_3)_2-$, $-C(CF_3)_2-$, $-(CH_2)-$, and $-NH(CH_3)-$. In an embodiment, these or other flexible linkages, when present, may sometimes be found in the $R^2$ portion of an aromatic diamine compound.

In another embodiment, the polyimide resin may comprise polyimides described in U.S. Pat. No. 3,179,614. The polyimides described therein may be prepared from at least one diamine and at least one anhydride. The at least one diamine may include but is not limited to: MPD, PPD, oxydianiline (ODA), methylene dianiline (MDA), and toluene diamine (TDA). The at least one dianhydride may include but is not limited to: BPDA, trimellitic anhydride (TMA), PMDA, maleic anhydride (MA), and nadic anhydride (NA).

Embodiments of polyimides for use in the polyimide resin include but are not limited to the following combinations of anhydride and diamine: BTDA-MPD; MA-MDA; BTDA-TDA-MPD; BTDA-MDA-NA; TMA-MPD & TMA-ODA; BPDA-ODA; BPDA-MPD; BPDA-PPD; BTDA-4,4'diaminobenzophenone; and BTDA-bis(*p*-aminophenoxy)*p,p*'-biphenyl. In an embodiment, the polyimide may be prepared from PMDA-ODA.

In an embodiment, the polyimide resin may be in the form of particles. In another embodiment, the particles may have size in a range from 1 micrometer to 1 mm.

The polyimide resin of the polyimide resin composition may be present in an amount from 30 wt % to 85 wt % of the total weight of the polyimide resin composition. In an embodiment, the polyimide resin may be present in an amount from 47 wt % to 50 wt % of the total weight of the polyimide resin composition. In another embodiment, the polyimide resin may be present in an amount of 50 wt % of the total weight of the polyimide resin composition.

The graphite for use in the present invention may be synthetically produced or naturally produced. Typically there are three types of naturally produced graphite that are commercially available; flake graphite, amorphous graphite, and crystal vein graphite. In an embodiment, the graphite may be synthetic graphite.

Synthetic graphite may be produced from coke and/or pitch that are derived from petroleum or coal. Synthetic graphite may be typically of higher purity than natural graphite but not as pure as crystalline graphite. An example of synthetic graphite is electrographite, which may be produced from calcined petroleum coke and coal tar pitch in an electric furnace. Another example of synthetic graphite may be produced by heating calcined petroleum pitch to 2,800° C. Synthetic graphite tends to be of a lower density, higher porosity, and higher electrical resistance than natural graphite.

The graphite of the polyimide resin composition may be present in an amount from 10 wt % to 60 wt % graphite of the total weight of the polyimide resin composition. In another embodiment, the graphite may be present from 43 wt % to 50 wt % graphite of the total weight of the polyimide resin composition. In an embodiment, the graphite may be present in an amount of 45 wt %. In another embodiment, the graphite may be present in an amount of 47 wt %. In another embodiment, the graphite may be present in an amount of 48 wt %. In another embodiment, the graphite may be present in an amount of 49 wt %. In an embodiment, the graphite may be synthetic graphite. In another embodiment, the graphite may be synthetic graphite and present in amount of 47 wt % of the total weight of the polyimide resin composition.

The BN may be in the form of a powder, an agglomerate, or a fiber. The BN is in a hexagonal form. The BN has an average particle size from 0.1 micron (μm) to 7 μm. In an embodiment the BN may have an average particle size of 2 μm. In another embodiment, the BN may be hexagonal having an average particle size of 0.7 μm.

The BN of the polyimide resin composition is present in an amount from 0.5 wt % to 10 wt % of the total weight of the polyimide resin composition. In another embodiment, the BN may be present from 0.5 wt % to 5 wt %. In an embodiment, the boron nitride may present in an amount of 1 wt %. In another embodiment, the graphite may present in an amount of 3 wt %. In another embodiment, the graphite may present in an amount of 5 wt %. In an embodiment, the boron nitride is hexagonal, may have an average particle size of 0.7 μm, and may be present in amount of 3 wt % of the total weight of the polyimide resin composition.

Polyimide resin compositions described herein may also include additives, fillers, and dry lubricants which do not depreciate the overall characteristics of the polyimide resin compositions, as would be evident to those having ordinary skill in the art.

Additives, fillers, and dry lubricants may include but are not limited to one or more of the following: pigments; antioxidants; materials to impart a lowered coefficient of thermal expansion, *e.g.* carbon fibers; materials to impart high strength properties *e.g.* glass fibers, ceramic fibers, boron fibers, glass beads, whiskers, graphite whiskers or diamond powders; materials to impart heat dissipation or heat resistance properties, *e.g.* aramid fibers, metal fibers, ceramic fibers, whiskers, silica, silicon carbide, silicon oxide, alumina, magnesium powder or titanium powder; materials to impart corona resistance, *e.g.* natural mica, synthetic mica or alumina; materials to impart electric conductivity, *e.g.* carbon black, silver powder, copper powder, aluminum powder or nickel powder. Fillers may be added as dry powders to the final resin prior to parts fabrication.

## Examples

Hexagonal BN (NX1 grade) was obtained from Momentive Performance Materials having an average particle size of 0.7 microns and a surface area of 20 $m^2$/g.

Graphite was a synthetic graphite having a maximum of 0.05 % ash and a median particle size of 8 μm. All particles had an aspect ratio of less than 10. Iron content was 6 ppm and was determined by inductively coupled plasma analysis.

Polyimide was made from polyimide precursors: 3,3',4,4'-biphenyltetracarboxylic dianhydride obtained from Mitsubishi Gas Chemical Co., Inc. (Tokyo, Japan), and MPD and PPD obtained from E.I. du Pont de Nemours and Company (Wilmington, Delaware, USA) as described below.

Anhydrous grade pyridine was obtained from Aldrich Company.

Embodiments of polyimide resin compositions disclosed herein may be prepared by the following procedures.

An embodiment of a polyimide resin composition comprising 50 wt% polyimide resin, 47 wt % graphite, and 3 wt % BN may be prepared. Polyimide resin based on 3,3',4,4'-biphenyltetracarboxylic dianhydride (BPDA), m-phenylene diamine (MPD), and *p*-phenylene diamine (PPD) were prepared according to the method described in U.S. Pat. No. 5,886,129. Amounts of components included 8.77 g MPD (81.1 mmol), 20.47 g (189 mmol) PPD, and 79.55 g (270 mmol) BPDA. The BPDA was added to a pyridine solution of the MPD and PPD. The polyamic acid solution produced was imidized in the presence of 41.92 g of graphite and 2.68 g of BN to produce a polymer containing 47 wt% graphite and 3.0 wt% BN. The polyimide resin composition was isolated, washed, and dried. After drying, the polyimide resin composition was ground through a 20 mesh screen using a Wiley mill to form a powder.

Other embodiments of the polyimide resin composition were prepared as above and are listed in the table shown in TABLE 1.

The polyimide resin compositions described herein have the BN and graphite therein encapsulated by the polyimide resin resulting from the BN and the graphite being suspended in the pyridine prior to the addition the polyamic

acid solution to the reaction vessel. During the imidization process, the BN and the graphite may be coated with the polyimide resin and may then become fully encapsulated by the polyimide resin. Infrared spectroscopic analysis may be used to show a difference in polyimide absorbance between encapsulated BN and non-encapsulated BN.

It has been discovered that another advantage that may be realized in the practice of some embodiments of polyimide resin compositions described herein in is that the polyimide resin compositions exhibit a decrease in wear.

It has been discovered that another advantage that may be realized in the practice of some embodiments of polyimide resin compositions described herein in is that the polyimide resin compositions exhibit a decrease in a coefficient of friction.

Examples of polyimide resin compositions prepared by the procedures described herein are provided in entries 1-22 of the table shown in TABLE 1 along with performance characteristics of the polyimide resin compositions. Performance characteristics of the polyimide resins include but are not limited to thermal oxidative stability (TOS) weight loss, wear rate, and coefficient of friction (COF). Entries 21 and 22 of the table shown in TABLE 1 include "Resin #2" which is a polyimide formed by the methods disclosed in U.S. Pat. No. 3,179,614 ('614) and described above regarding '614. Reported TOS values are the average of two measurements for each polyimide resin composition.

Dried polyimide resin compositions were fabricated into tensile bars by direct forming according to ASTM E8 (2006), "Standard Tension Test Specimen for Powdered Metal Products-Flat Unmachined Tensile Test Bar", at room temperature and 100,000 psi (690 MPa) forming pressure. The tensile bars were sintered at 405 °C for 3 hours with a nitrogen purge.

Thermal Oxidative Stability ("TOS") was tested by first weighing the tensile bars, then exposing two pieces of each tensile bar to a temperature of 800 °F (427 °C) for a period of 25 hours at a pressure of 88 psia (0.61 MPa) in air. A final weight measurement was then taken, and the percent weight loss of each piece of tensile bar was calculated according to the following formula:

$$\%\ \text{weight loss} = \frac{\text{Initial Wt.} - \text{Wt. After}}{\text{Initial Wt.}} \times 100$$

and the percentage calculated and reported is percent weight loss. Percent weight loss for each of the two pieces was then averaged, and the average percent weight loss is reported.

In these tests, a steel ball bearing was rubbed against the surface of a test specimen under a 2 pound (0.91 kg) load for a 3 hour period. At the end of the experiment, the volume of the resulting wear scar on the test specimen ("Resin Wear") was measured. Resin Wear was measured by optical profilometry, from which the volume of the wear scar may be determined. The result for Resin Wear is reported as the volume of weight lost, stated in $in^3$ or $cm^3$. All measurements were made using the test procedures described in ASTM G 133-05 (2005), "Standard Test Method for Linearly Reciprocating Ball-on-Flat Sliding Wear", modified by using a temperature controlled oven, with acquisition of friction force data on a computer.

A Falex block-on-ring wear tester was used to test the polyimide resin compositions. Testing was conducted according to the procedures described in ASTM D2714 and U.S. Pat. No. 5,789,523 (cols 4-5), using PV (pressure x velocity) conditions of 25,000 and 100,000 psi-fpm (0.876 to 3.503 $N/mm^2 \times m/sec$).

The polyimide resin compositions described herein have improved TOS weight loss and improved wear rate performance characteristics over related compositions not having the BN and graphite encapsulated by the polyimide resin and/or made from dry blended processes or other processes not resulting in compositions having encapsulated BN and encapsulated graphite therein.

A comparative example (CE) of a polyimide resin composition prepared by the procedures described herein is listed in entry 23 of the table shown in TABLE 1 along with performance characteristics of the CE polyimide resin composition. Performance characteristics of the CE polyimide resin include thermal oxidative stability (TOS) weight loss, wear rate, and coefficient of friction (COF).

Particles of polyimide resins based on BPDA, PPD, and MPD were prepared according to the method described in U.S. Pat. No. 5,886,129. In accordance with the method taught in Practical Examples 1 and 2 and Comparison Examples 1 to 4 in Japanese Patent Application H1-259063(A), a dry blend of these polyimide particles (25.0 g, 50 wt%), graphite (23.5 g, 47 wt%), and boron nitride (1.5 g, 3 wt%) was prepared and mixed intimately by grinding three times through a 10 mesh screen using a Wiley mill to form the comparative example (CE) polyimide resin composition listed in entry 23 of the table shown in TABLE 1. A set of 5 tensile bars were prepared from the CE polyimide resin composition. Four of the bars were too brittle to test and the fifth bar had a measured tensile strength of 1.5 kpsi (10.34 MPa) and elongation of 0.2%. The TOS weight loss at 800 C (427 °C) was 27.10% and the wear weight loss at 800 °F (427 °C) was 8944 $10^{-8}$ $in^3$. In the PV 100000 wear test, Kw=17.2 and CoF=0.06.

The performance characteristics of the CE polyimide resin composition were significantly inferior compared to the performance characteristics of the polyimide resin compositions of the present invention. As can be seen in the table

shown in TABLE 1, the TOS weight loss at 800 °F (427 °C) of the CE polyimide resin was significantly greater than the polyimide resin compositions of the present invention, with an increase of a factor of 20 in the amount of material lost and the TOS wear weight loss at 800 °F (427 °C) of the CE polyimide resin was less than the polyimide resin compositions of the present invention by a factor of 4. The inferior performance characteristics the CE polyimide resin composition is attributed to the graphite and boron nitride filler of the CE polyimide resin composition without being encapsulated by the resin. Not only did the non-encapsulation lead to inferior performance characteristics but also led to poor structural characteristics as four tensile bars comprising the CE polyimide resin composition were too brittle to undergo testing. The similarity of the Falex wear data between the CE polyimide resin and examples of the present invention is due to the Falex wear test being a less rigorous test than the 800 F wear test and more forgiving to text samples formed from poorly cohering particles such as CE polyimide resin tested (entry 23).

Articles comprising or prepared from, the polyimide resin compositions described herein may be useful in aerospace applications such as aircraft engine parts, such as bushings (e.g., variable stator vane bushings), bearings, washers (e.g., thrust washers), seal rings, gaskets, wear pads, splines, wear strips, bumpers, and slide blocks. These aerospace application parts may be used in all types of aircraft engines such as reciprocating piston engines and, particularly, jet engines. Other examples of aerospace applications include without limitation: turbochargers; shrouds, aircraft subsystems such as thrust reversers, nacelles, flaps systems and valves, and aircraft fasteners; airplane spline couplings used to drive generators, hydraulic pumps, and other equipment; tube clamps for an aircraft engine to attach hydraulic, hot air, and/or electrical lines on the engine housing; control linkage components, door mechanisms, and rocket and satellite components.

An article comprising or prepared from, a polyimide resin composition described herein may be in contact with metal at least part of the time when the apparatus in which the article resides is assembled and in normal use. The apparatus may include but is not limited to a compressor, an automotive engine, and a turbine engine.

The terms "first", "second", and the like, herein do not denote any order, quantity, or importance, but rather are used to distinguish one element from another, and the terms "a" and "an" herein do not denote a limitation of quantity, but rather denotes the presence of at least one of the referenced items. The suffix "(s)" as used herein is intended to include both the singular and the plural of the term that it modifies, thereby including one or more of that term (e.g., the metal(s) includes one or more metals). Ranges disclosed herein are inclusive and independently combinable (e.g., ranges of "to 25 wt %, or, more specifically, 5 wt % to 20 wt %", is inclusive of the endpoints and all intermediate values of ranges of "5 wt % to 25 wt %", etc.)

While various embodiments are described herein, it will be appreciated from the specification that various embodiments of elements, variations or improvements therein may be made by those skilled in the art, and are within the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

TABLE 1

| **Entry** | **Formulation** | **TOS (700 °F) (371°C)** | **TOS (800 °F) (427°C)** | **Wear (800 °F) (427 °C)** | **PV100000** | |
|---|---|---|---|---|---|---|
| **#** | **% Polyimide/%Graphite/ %Boron Nitride** | **% wt loss** | **% wt loss** | **Vol ($10^{-8}$ in$^3$) [$10^{-6}$ cm$^3$]** | **Kw** | **CoF** |
| 1 | 50 Resin/47 Graphite/3 BN | 0.75 | 2.22 | 1435 [235.15] | | |
| 2 | 50 Resin/47 Grahite/3 BN | 0.63 | 2.02 | 1417 [232.20] | | |
| 3 | 50 Resin/45 Grahite/5 BN | 0.75 | 2.86 | 1371 [224.67] | 25 | 0.06 |
| 4 | 50 Resin/47 Graphite/3 BN | 0.83 | 2.43 | 1756 [287.76] | | |
| 5 | 50 Resin/47 Graphite/3 BN | 0.70 | 2.31 | 1798 [294.64] | | |
| 6 | 50 Resin/47 Grahite/3 BN | 0.74 | 2.37 | 1714 [280.87] | | |
| 7 | 50 Resin/48 Grahite/2 BN | 0.99 | 2.97 | 1697 [278.09] | | |
| 8 | 50 Resin/47 Graphite/3 BN | 0.73 | 2.03 | 1675 [274.48] | 34.7 | 0.07 |
| 9 | 50 Resin/49 Graphite/1 BN | 1.48 | 3.71 | 2309 [378.38] | | |
| 10 | 50 Resin/47 Graphite/3 BN | 0.68 | 1.77 | 1511 [247.61] | 21.7 | 0.07 |
| 11 | 50 Resin/47 Graphite/3 BN | 0.93 | 2.27 | 1658 [271.70] | | |

(continued)

| Entry | Formulation | TOS (700 °F) (371°C) | TOS (800 °F) (427°C) | Wear (800 °F) (427 °C) | PV100000 | |
|---|---|---|---|---|---|---|
| # | % Polyimide/%Graphite/ %Boron Nitride | % wt loss | % wt loss | Vol ($10^{-8}$ in$^3$) [$10^{-6}$ cm$^3$] | Kw | CoF |
| 12 | 50 Resin/40 Graphite/10 BN | 0.90 | 3.6 | 2338 [383.13] | | |
| 13 | 50 Resin/45 Graphite/5 BN | 0.62 | 2.18 | 1658 [271.70] | 18.6 | 0.06 |
| 14 | 50 Resin/45 Graphite/5 BN | 0.56 | 2.69 | 1431 [234.50] | | |
| 15 | 100 Resin/0 Graphite/0 BN | 8.47 87.08 | | 6043 [990.27] | | |
| 16 | 50 Resin/47 Graphite/3 BN | 0.58 | 2.32 | 1763 [288.90] | 16.4 | 0.04 |
| 17 | 50 Resin/ 49 Graphite/ 1 BN | 0.49 | 2.07 | 1535 [251.54] | 17.5 | 0.06 |
| 18 | 50 Resin/49.5 Grahite/0.5 BN | 0.75 | 2.66 | 1748 [286.45] | 26.2 | 0.07 |
| 19 | 50 Resin/47 Graphite/3 BN | 0.70 | | | | |
| 20 | 50 Resin/47 Grahite/3 BN | 0.70 | | | | |
| 21 | 85 Resin #2/12 Graphite/3 BN | 18.38 | | | 38.7 | 0.13 |
| 22 | 63 Resin #2/34 Graphite /3 BN | 11.02 | | | 26.2 | 0.07 |
| 23 | CE 50 Resin/47 Graphite/3 BN | - | 27.10 | 8944 [1465.66] | 17.2 | 0.06 |

## Claims

**1.** A polyimide resin composition comprising:

0.5 weight percent (wt %) to 10 wt % hexagonal boron nitride having an average particle size from 0.1 μm to 7 μm;
10 wt % to 60 wt % graphite; and
30 wt % to 85 wt % polyimide resin based on the weight of the polyimide resin composition, wherein the polyimide resin encapsulates the boron nitride and encapsulates the graphite.

**2.** The polyimide resin composition according to claim 1, wherein the boron nitride has a average particle size of 0.7 micrometers.

**3.** The polyimide resin composition according to claim 1, wherein the boron nitride is present in a range from 1 wt % to 3 wt %.

**4.** The polyimide resin composition according to claim 3, wherein the boron nitride is present in 3 wt %.

**5.** The polyimide resin composition according to claim 1, comprising 0.5 wt % to 5 wt % boron nitride; 43 wt % to 50 wt % graphite; and 47 wt % to 50 wt % polyimide resin.

**6.** The polyimide resin composition according to claim 1, comprising 3 wt % boron nitride, 47 wt % graphite, and 50 wt % polyimide resin.

**7.** The polyimide resin composition according to claim 1, wherein the polyimide is formed from 3,3',4,4'-biphenyl dianhydride and a 70/30 mixture ofp-phenylenediamine and m-phenylenediamine.

**8.** The polyimide resin composition according to claim 1, in the form of a molded article, wherein the article has a wear volume loss in a range from 1,371x$10^{-8}$ cubic inches (22.467 x$10^{-8}$ cm$^3$) to 2,338x$10^{-8}$ cubic inches (38.313x$10^{-8}$

$cm^3$) at 427 °C; as determined by ASTM G 133-05 (2005).

**9.** The polyimide resin composition according to claim 1, in the form of a molded article, wherein the article has an average wear volume loss of 1,624x$10^{-8}$ cubic inches (26.613x$10^{-8}$ $cm^3$) at 427 °C; as determined by ASTM G 133-05 (2005).

**10.** An article comprising the composition of claim 1.

**11.** The article of claim 10 wherein said article is selected from the group consisting of a bushing, a spacer, a valve, a seal ring, a washer, a part in a compressor, a component in an automotive engine, and a component in a turbine engine.

**12.** An article comprising the composition of claim 5.

**13.** The article of claim 12 wherein said article is selected from the group consisting of a bushing, a spacer, a valve, a seal ring, and a washer.

**Patentansprüche**

**1.** Polyimidharzzusammensetzung umfassend:

0,5 Gewichtsprozent (Gew.-%) bis 10 Gew.-% hexagonales Bornitrid, das eine durchschnittliche Teilchengröße von 0,1 μm bis 7 μm aufweist;
10 Gew.-% bis 60 Gew.-% Graphit; und
30 Gew.-% bis 85 Gew.-% Polyimidharz, auf das Gewicht der Polyimidharzzusammensetzung bezogen, wobei das Polyimidharz das Bornitrid verkapselt und den Graphit verkapselt.

**2.** Polyimidharzzusammensetzung nach Anspruch 1, wobei das Bornitrid eine durchschnittliche Teilchengröße von 0,7 Mikrometern aufweist.

**3.** Polyimidharzzusammensetzung nach Anspruch 1, wobei das Bornitrid in einem Bereich von 1 Gew.-% bis 3 Gew.-% vorliegt.

**4.** Polyimidharzzusammensetzung nach Anspruch 3, wobei das Bornitrid in einer Menge von 3 Gew.-% vorliegt.

**5.** Polyimidharzzusammensetzung nach Anspruch 1, umfassend 0,5 Gew.-% bis 5 Gew.-% Bornitrid; 43 Gew.-% bis 50 Gew.-% Graphit; und 47 Gew.-% bis 50 Gew.-% Polyimidharz.

**6.** Polyimidharzzusammensetzung nach Anspruch 1 umfassend 3 Gew.-% Bornitrid, 47 Gew.-% Graphit und 50 Gew.-% Polyimidharz.

**7.** Polyimidharzzusammensetzung nach Anspruch 1, wobei das Polyimid aus 3,3',4,4'-Biphenyldianhydrid und einer 70/30-Mischung von p-Phenylendiamin und m-Phenylendiamin gebildet wird.

**8.** Polyimidharzzusammensetzung nach Anspruch 1 in Form eines geformten Artikels, wobei der Artikel einen Abriebvolumenverlust im Bereich von 1,371x$10^{-8}$ Kubikzoll (22,467x$10^{-8}$ $cm^3$) bis 2,338x$10^{-8}$ Kubikzoll (38,313x$10^{-8}$ $cm^3$) bei 427 °C, wie durch ASTM G 133-05 (2005) bestimmt, aufweist.

**9.** Polyimidharzzusammensetzung nach Anspruch 1 in Form eines geformten Artikels, wobei der Artikel einen durchschnittlichen Abriebvolumenverlust von 1.624x$10^{-8}$ Kubikzoll (26,613x$10^{-8}$ $cm^3$) bei 427 °C, wie durch ASTM G 133-05 (2005) bestimmt, aufweist.

**10.** Artikel umfassend die Zusammensetzung nach Anspruch 1.

**11.** Artikel nach Anspruch 10, wobei der Artikel aus der Gruppe ausgewählt ist bestehend aus einer Buchse, einem Abstandhalter, einem Ventil, einem Dichtring, einer Unterlegscheibe, einem Teil in einem Kompressor, einer Komponente in einem Fahrzeugmotor und einer Komponente in einem Turbinenmotor.

**12.** Artikel umfassend die Zusammensetzung nach Anspruch 5.

**13.** Artikel nach Anspruch 12, wobei der Artikel aus der Gruppe ausgewählt ist bestehend aus einer Buchse, einem Abstandhalter, einem Ventil, einem Dichtring und einer Unterlegscheibe.

## Revendications

**1.** Composition de résine de polyimide comprenant:

de 0,5 pour cent en poids (% en pds) à 10 % en pds de nitrure de bore hexagonal ayant une taille moyenne de particule de 0,1 $\mu$m à 7 $\mu$m;
de 10 % en pds à 60 % en pds de graphite; et
de 30 % en pds à 85 % en pds de résine de polyimide basés sur le poids de la composition de résine de polyimide, la résine de polyimide encapsulant le nitrure de bore et encapsulant le graphite.

**2.** Composition de résine de polyimide selon la revendication 1, le nitrure de bore ayant une taille moyenne de particule de 0,7 micromètre.

**3.** Composition de résine de polyimide selon la revendication 1, le nitrure de bore étant présent en une plage de 1 % en pds à 3 % en pds.

**4.** Composition de résine de polyimide selon la revendication 3, le nitrure de bore étant présent en une quantité de 3 % en pds.

**5.** Composition de résine de polyimide selon la revendication 1, comprenant de 0,5 % en pds à 5 % en pds de nitrure de bore; de 43 % en pds à 50 % en pds de graphite; et de 47 % en pds à 50 % en pds de résine de polyimide.

**6.** Composition de résine de polyimide selon la revendication 1, comprenant 3 % en pds de nitrure de bore, 47 % en pds de graphite, et 50 % en pds de résine de polyimide.

**7.** Composition de résine de polyimide selon la revendication 1, le polyimide étant formé à partir de dianhydride de 3,3',4,4'-biphényle et d'un mélange 70/30 de *p*-phénylènediamine et de *m*-phénylènediamine.

**8.** Composition de résine de polyimide selon la revendication 1, se présentant sous la forme d'un article moulé, l'article ayant un taux d'usure volumique situé dans une plage de 1,371 x $10^{-8}$ pouces cubiques (22,467 x $10^{-8}$ $cm^3$) à 2,338 x $10^{-8}$ pouces cubes (38,313 x $10^{-8}$ $cm^3$) à 427°C; tel que déterminé selon la norme ASTM G 133-05 (2005).

**9.** Composition de résine de polyimide selon la revendication 1, se présentant sous la forme d'un article moulé, l'article ayant un taux d'usure volumique moyen de 1,624 x $10^{-8}$ pouces cubes (26,613 x $10^{-8}$ $cm^3$) à 427°C; tel que déterminé selon la norme ASTM G 133-05 (2005).

**10.** Article comprenant la composition selon la revendication 1.

**11.** Article selon la revendication 10, ledit article étant sélectionné dans le groupe constitué d'une garniture d'étanchéité, d'un espaceur, d'une vanne, d'un anneau d'étanchéité, d'une rondelle, d'une pièce dans un compresseur, d'un composant dans un moteur automobile, et d'un composant dans un moteur de turbine.

**12.** Article comprenant la composition selon la revendication 5.

**13.** Article selon la revendication 12, ledit article étant sélectionné dans le groupe constitué d'une garniture d'étanchéité, d'un espaceur, d'une vanne, d'un anneau d'étanchéité, et d'une rondelle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008054413 A2
- US 4898905 A
- US 5886129 A
- US 3179614 A
- US 5789523 A
- JP 259063 A


### Non-patent literature cited in the description


- Standard Test Method for Linearly Reciprocating Ball-on-Flat Sliding Wear. *ASTM G,* 2005, 133-05